# EUROPÄISCHE PATENTSCHRIFT

(11) **EP 2 307 685 B1**
(45) Veröffentlichungstag und Bekanntmachung des Hinweises auf die Patenterteilung: **14.01.2015**
(21) Anmeldenummer: 09772126.0
(22) Anmeldetag: 29.06.2009
(51) Int. Cl.: F02B 37/04, F02B 37/22, F02D 9/00

(54) **KOMPRESSORSYSTEM MIT BESCHRÄNKTEM ANSAUGLADEDRUCK**
COMPRESSOR ARRANGEMENT WITH LIMITED INTAKE AIR PRESSURE
SYSTÈME COMPRESSEUR POUR CONTRÔLER LA PRESSION D'ADMISSION

(30) Priorität: 02.07.2008 DE 102008031317
(43) Veröffentlichungstag der Anmeldung: 13.04.2011
(73) Patentinhaber: KNORR-BREMSE Systeme für Nutzfahrzeuge GmbH, 80809 München (DE)
(72) Erfinder: GERUM, Eduard, 83026 Rosenheim (DE)
(74) Vertreter: Schönmann, Kurt
(86) Internationale Anmeldenummer: PCT/EP2009/004671
(87) Internationale Veröffentlichungsnummer: WO 2010/000426

(56) Entgegenhaltungen:
- WO-A1-2007/083131
- WO-A1-2007/111919
- DE-A1- 10 124 543
- DE-A1-102004 047 975
- DE-A1-102005 031 744
- US-A1- 2003 140 630
- US-B1- 6 637 205

## Beschreibung

Die Erfindung betrifft ein Kompressorsystem für ein Fahrzeug, mit einem von einem Antriebsmotor des Fahrzeugs angetriebenen Kompressor und einer Ansaugluftführung zur Zuführung von bereits durch einen Turbolader des Antriebsmotors vorverdichteter Luft zu dem Kompressor.

Die Erfindung betrifft weiterhin ein Verfahren zum Betreiben eines Kompressorsystems für ein Fahrzeug, mit einem von einem Antriebsmotor des Fahrzeugs angetriebenen Kompressor und einer Ansaugluftführung zur Zuführung von bereits durch einen Turbolader des Antriebsmotors vorverdichteter Luft zu dem Kompressor.

Fahrzeuge mit druckluftbetriebenen Teilsystemen, zum Beispiel einer Luftfederung oder Druckluftbremsen, verfügen üblicherweise über einen von einem Antriebsmotor des Fahrzeugs angetriebenen Kompressor zur Erzeugung der benötigten Druckluft. Zur Steigerung der Energieeffizienz des Fahrzeugs wird der verwendete Antriebsmotor oftmals mit einem Turbolader ausgestattet. Der von dem Antriebsmotor angetriebene Kompressor wird meist als ein Umgebungsluft ansaugender Kompressor ausgelegt. Man kann die Leistungsfähigkeit des Kompressors deutlich erhöhen, wenn man auch ihn auflädt. Dies kann zum Beispiel durch Ansaugen bereits vorverdichteter Luft nach einem Verdichter des Turboladers und eines zugehörigen Ladeluftkühlers erfolgen. Man erreicht dadurch eine überproportionale Steigerung des geförderten Luftvolumens und einen besseren Wirkungsgrad durch Verringerung der Strömungsverluste im Ansaugsystem des Kompressors. Ein weiterer Vorteil ist der reduzierte Ölverbrauch, der im Wesentlich dadurch bestimmt wird, dass während einer Luftansaugphase, im Gegensatz zu einem konventionellen Umgebungsluft ansaugenden Kompressor, kein Unterdruck in dem Zylinder herrscht.

Ein Nachteil eines aufgeladenen Kompressors ist jedoch, dass er in einem Abblasebetrieb, das heißt in einer Leerlaufphase, in der der Kompressor keine komprimierte Luft in das Versorgungssystem des Fahrzeugs fördert, nach wie vor ein großes Luftvolumen fördert, woraus in diesem Betriebzustand eine erheblich höhere Verlustleistung als bei einem konventionellen Umgebungsluft ansaugenden Kompressor resultiert.

Ein entsprechendes System ist aus DE 102 004 047 975 A bekannt.

Der Erfindung liegt daher die Aufgabe zugrunde, diesen Nachteil zumindest teilweise zu beheben, wobei gleichzeitig der Ölverbrauch des Kompressors auf einem niedrigen Niveau verbleiben soll.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Kompressorsystem dadurch auf, dass in der Ansaugluftführung Mittel zum Verringern des Strömungsquerschnitts angeordnet sind, über die der Ladedruck der dem Kompressor zugeführten bereits vorverdichteten Luft beschränkbar ist. Durch das Anordnen der Mittel zum Verringern des Strömungsquerschnitts in der Ansaugluftführung kann durch den entstehenden Staudruck der dem aufgeladenen Kompressor zugeführte Ladedruck beliebig reduziert werden. Insbesondere kann in einer Abblase- oder Leerlaufphase der dem Kompressor zugeführte Ladedruck reduziert werden, so dass das geförderte Luftvolumen in der Leerlaufphase verringert wird, was die Leistungsaufnahme des Kompressors reduziert. Als Mittel zum Verringern des Strömungsquerschnitts können beispielsweise eine Drosselklappe, ein senkrecht zur Luftströmungsrichtung in die Ansaugluftführung einschiebbarer Schieber oder eine drehbar gelagerte durchbohrte Kugel, wie sie beispielsweise aus einem Kugelventil bekannt ist, ver-wendet werden.

Vorteilhafterweise ist dabei vorgesehen, dass die Mittel zum Verringern des Strömungsquerschnitts von einem pneumatischen Arbeitszylinder mechanisch betätig-bar sind. Die Verwendung eines pneumatischen Arbeitszylinders zum Betätigen der Mittel zum Verringern der Strömungsquerschnitts erlaubt ein schnelles und präzises Anpassen des freigegebenen Strömungsquerschnitts der Ansaugluftführung und damit, über die Anpassung des verursachten Staudrucks, ein Anpassen des für den Kompressor bereitgestellten Ladedrucks.

Besonders bevorzugt ist, dass der Arbeitszylinder einen beweglichen Kolben umfasst Die Verwendung eines Arbeitszylinders mit einem beweglichen Kolben erlaubt den Aufbau einer äußert robusten pneumatisch angetriebenen Betätigungsmechanik mit einem beliebig langen Hebelweg, der durch die Länge des Arbeitszylinders definierbar ist.

Alternativ kann jedoch auch vorgesehen sein, dass der Arbeitszylinder eine flexible Membran umfasst. Die Verwendung einer flexiblen Membran anstelle eines beweglichen Kolbens ermöglicht insbesondere kürzere Ansprechzeiten für den Arbeitszylinder, da eine geringere Masseträgheit zu überwinden ist. Dies ist insbesondere bei kurzen Leerlaufphasen vorteilhaft.

Idealerweise ist vorgesehen, dass der pneumatische Arbeitszylinders über eine pneumatische Steuerleitung mit dem stromabwärts der Mittel zum Verringern des Strömungsquerschnitts anstehenden Ladedruck beaufschlagbar ist. Das direkte Beaufschlagen des Arbeitszylinders mit dem stromabwärts der Mittel zum Verringern des Strömungsquerschnitts anstehenden Ladedruck erlaubt eine Selbstanpassung von bereitgestelltem Ladedruck und freigegebenem Strömungsquerschnitt. Ist der bereitgestellte Ladedruck größer als erlaubt, so wird durch das Ansteuern des Arbeitszylinders über eine Mechanik der freigegebene Strömungsquerschnitt verringert, wodurch wiederum der bereitgestellte Ladedruck verringert wird. Umgekehrt wird bei einem zu geringen bereitgestellten Ladedruck der Arbeitszylinder weniger stark ausgesteuert, wodurch der freigegebene Strömungsquerschnitt vergrößert wird, was einen höheren bereitgestellten Ladedruck zur Folge hat. Der Maximalwert des bereitgestellten Ladedrucks kann jedoch nicht den vor den Mitteln zum Verringern des Strömungsquerschnitts anliegenden Ladedruck übersteigen.

Es kann vorgesehen sein, dass der pneumatische Arbeitszylinder über ein Relaisventil mit einem Arbeitsdruck beaufschlagbar ist, wobei ein pneumatischer Steuereingang des Relaisventils über eine pneumatische Steuerleitung mit dem stromabwärts der Mittel zum Verringern des Strömungsquerschnitts anstehenden Ladedruck beaufschlagbar ist. Die Verwendung eines Relaisventils erlaubt das Ansteuern des Arbeitszylinders mit einem gegenüber den Druckschwankungen stromabwärts der Mittel zum Verringern des Strömungsquerschnitts erhöhten Druckniveau mit größeren Druckschwankungen. Die Ansteuerung des Arbeitszylinders kann dadurch präziser erfolgen.

Nützlicherweise ist vorgesehen, dass in der pneumatischen Steuerleitung ein 3/2-Wegeventil mit eigener Entlüftung angeordnet ist, um die Steuerleitung drucklos schalten zu können. Durch das Vorsehen eines 3/2-Wegeventils mit eigener Entlüftung in der pneumatischen Steuerleitung kann das Betätigen des Arbeitszylinders unterbunden werden. Wenn die pneumatische Steuerleitung drucklos geschaltet ist, wird ein maximal möglicher Ladedruck für den Kompressor bereitgestellt, da die in der Ansaugluftführung angeordneten Mittel zum Verringern des Strömungsquerschnitts dann einen möglichst geringen Staudruck erzeugen.

Vorteilhafterweise kann vorgesehen sein, dass das Kompressorsystem ein elektrisch ansteuerbares Stetigventil mit einem pneumatischen Versorgungsdruckeingang, einem elektrischen Steuereingang und einem pneumatischen Ausgang zum Betätigen des Arbeitszylinders umfasst, dass der stromabwärts der Mittel zum Verringern des Strömungsquerschnitts anstehende Ladedruck von einem Drucksensor erfassbar ist, und dass das Kompressorsystem ein elektronisches Steuergerät umfasst, das geeignet ist, ein elektrisches Steuersignal zum Betätigen des Stetigventils in Abhängigkeit von dem ermittelten Ladedruck zu erzeugen, um den Ladedruck zu beschränken. Die Verwendung eines elektrisch ansteuerbaren Stetigventils, womit ein nicht diskret schaltendes, einen stetigen Übergang zwischen den Schaltstellungen zulassendes Wegeventil bezeichnet ist, erlaubt im Zusammenhang mit dem stromabwärts der Mittel zum Verringern des Strömungsquerschnitts angeordneten Drucksensor das präzise Betätigen der Mittel zum Verringern des Strömungsquerschnitts. Das Stetigventil kann insbesondere als ein Proportionalventil mit nichtlinearer Volumenstrom-Kennlinie, als ein Regelventil mit linearer Volumenstrom-Kennlinie oder als ein Servoventil, das heißt als ein Wegeventil mit analoger Ansteuerbarkeit, ausgeführt sein. Durch die Verwendung eines Drucksensors wird die Verwendung nicht aufbereiteter vom Turbolader vorverdichteter Luft zum direkten oder indirekten Betätigen der Mittel zum Verringern der Strömungsquerschnitts vermieden. Da die vom Turbolader vorverdichtete Luft insbesondere noch nicht getrocknet ist, werden die zum Betätigen der Mittel zum Verringern des Strömungsquerschnitts verwendeten pneumatischen Einrichtungen effektiv vor Korrosion geschützt.

In diesem Zusammenhang ist auch denkbar, dass die Mittel zum Verringern des Strömungsquerschnitts von einem elektrisch ansteuerbaren Servomotor betätigbar sind. Durch die Verwendung eines elektrisch ansteuerbaren Servomotors kann ebenfalls ein korrosionsbedingter Ausfall der pneumatisch/mechanischen Betätigungsvorrichtung verhindert werden.

Weiterhin kann es von Nutzen sein, dass das Kompressorsystem ein elektrisches Steuergerät umfasst, das geeignet ist, ein elektrisches Steuersignal zum Ansteuern des elektrisch ansteuerbaren Servomotors zu erzeugen, um den Ladedruck zu beschränken, wobei das Steuersignal auf einem von einem Drucksensor stromabwärts der Mittel zum Verringern des Strömungsquerschnitts ermittelten Ladedruck basiert. Die Verwendung eines elektronischen Steuergerätes zusammen mit einem Servomotor zum Betätigen der Mittel zum Verringern des Strömungsquerschnitts erlauben eine flexible Anpassung des dem Kompressor zugeführten Ladedrucks.

Weiterhin kann vorgesehen sein, dass das Kompressorsystem eine dem Kompressor zugeordnete Kupplung umfasst, die geeignet ist, den Kompressor vollständig von dem Antriebsmotor zu entkoppeln. Durch die Verwendung einer Kupplung zum vollständigen Entkoppeln des Kompressors von dem Antriebsmotor ist sowohl die Ölförderung als auch der Energieverbrauch des Kompressors in einer Leerlaufphase auf Null reduzierbar.

Das gattungsgemäße Verfahren wird dadurch weiterentwickelt, dass der Ladedruck der dem Kompressor zugeführten bereits vorverdichteten Luft durch Betätigen von in der Ansaugluftführung angeordneten Mitteln zum Verringern des Strömungsquerschnitts auf einen einstellbaren Höchstwert beschränkt wird. Auf diese Weise werden die Vorteile und Besonderheiten des erfindungsgemäßen Kompressorsystems auch im Rahmen eines Verfahrens zum Betreiben eines Kompressorsystems umgesetzt.

Dies gilt auch für die nachfolgend angegebenen besonders bevorzugen Ausführungsformen des erfindungsgemäßen Verfahrens.

Dieses wird in nützlicher Weise dadurch weiterentwickelt, dass der Höchstwert in Abhängigkeit von dem Betriebszustand unterschiedliche gewählt wird. Das Anpassen des Höchstwerts des dem Kompressor zugeführten Ladedrucks an den Betriebszustand des Kompressorssystems erlaubt eine Optimierung des Betriebsverhaltens des Kompressorssystems. Beispielsweise kann in einer Leerlaufphase der Energieverbrauch des Kompressors durch Absenken des bereitgestellten Ladedrucks reduziert werden, während in einer Förderphase des Kompressorsystems bei niedriger Kompressordrehzahl ein möglichst hoher Ladedruck für den Kompressor bereitgestellt wird, um das geförderte Luftvolumen zu maximieren. Weiterhin kann in einer Förderphase des Kompressorsystems ebenfalls ein maximal zulässiger Ladedruck des Kompressors vorgegeben sein, um insbesondere die thermische Belastung des Kompressors zu beschränken.

Der Höchstwert wird in einer Leerlaufphase in Abhängigkeit von zumindest einer der folgenden Größen gewählt wird: Ölauswurf des Kompressors, Verlustleistung des Kompressors. Um die Verlustleistung des Kompressors in einer Leerlaufphase zu minimieren, ist ein möglichst geringer Ladedruck für den Kompressor bereitzustellen. Der bereitgestellte Ladedruck sollte dabei idealerweise dem Umgebungsdruck entsprechen, wodurch die Verlustleistung des Kompressors identisch mit der Verlustleistung eines Umgebungsluft ansaugenden Kompressors wäre. Gleichzeitig soll jedoch der Ölauswurf des Kompressors möglichst gering ausfallen, wobei der Ölauswurf des Kompressors mit sinkendem Laddruck aufgrund des steigenden Unterdrucks im Kolbenraum während einer Ansaugphase ansteigt. Die Bestimmung des maximal zulässigen Ladedrucks in Abhängigkeit von der zulässigen Verlustleistung in einer Leerlaufphase und dem zulässigen Ölauswurf einer Leerlaufphase ist daher vorteilhaft.

Besonders bevorzugt ist, dass der dem Kompressor zugeführte Ladedruck durch eine dynamische Anpassung des durch die Mittel zum Verringern des Strömungsquerschnitts freigegebenen Strömungsquerschnitts bei einem Überschreiten des einstellbaren Höchstwerts unabhängig von der Kompressordrehzahl und dem von dem Turbolader bereitgestellten Ladedruck konstant gehalten wird. Die dynamische Anpassung des dem Kompressor zugeführten Ladedrucks, beispielsweise in einer Leerlaufphase, hält insbesondere den Ölauswurf des Kompressors auf einem konstant niedrigen Niveau.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung eines Fahrzeugs mit einem erfindungsgemäßen Kompressorsystem;
- Figur 2: einen seitlichen Querschnitt einer Ansaugluftführung mit Mitteln zum Reduzieren des Strömungsquerschnitts;
- Figur 3: eine erste Ausführungsform einer Ansaugluftführung mit Mitteln zum Reduzieren des Strömungsquerschnitts und einer zugeordneten Betätigungsvorrichtung;
- Figur 4: eine zweite Ausführungsform einer Ansaugluftführung mit Mitteln zum Reduzieren des Strömungsquerschnitts und einer zugeordneten Betätigungsvorrichtung;
- Figur 5: eine dritte Ausführungsform einer Ansaugluftführung mit Mitteln zum Reduzieren des Strömungsquerschnitts und einer zugeordneten Betätigungsvorrichtung;
- Figur 6: eine vierte Ausführungsform einer Ansaugluftführung mit Mitteln zum Reduzieren des Strömungsquerschnitts und einer zugeordneten Betätigungsvorrichtung;
- Figur 7: einen ersten möglichen Strömungsquerschnitt einer Ansaugluftführung;
- Figur 8: einen zweiten möglichen Strömungsquerschnitt einer Ansaugluftführung und
- Figur 9: ein Flussdiagramm zur Veranschaulichung des erfindungsgemäßen Verfahrens.

In den folgenden Zeichnungen bezeichnen gleiche Bezugszeichen gleiche oder gleichartige Teile.

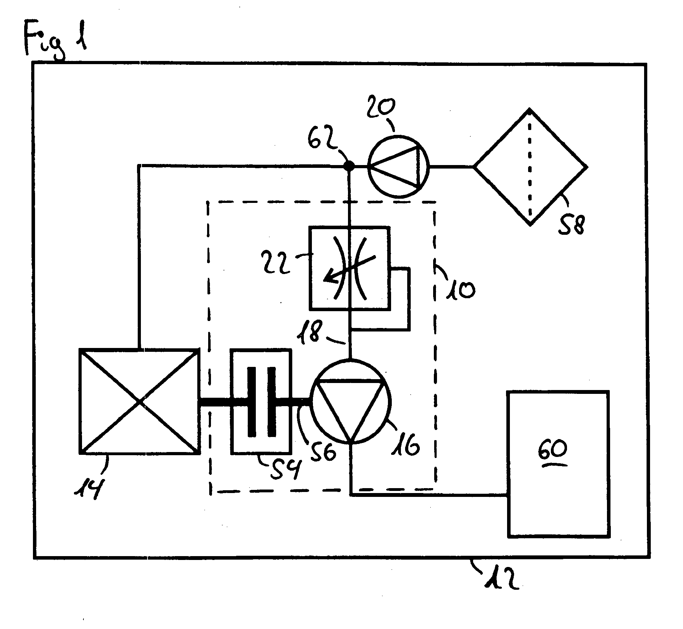

Figur 1 zeigt eine schematische Darstellung eines Fahrzeugs mit einem erfindungsgemäßen Kompressorsystem. Das dargestellte Fahrzeug 12 umfasst neben dem erfindungsgemäßen Kompressorsystem 10 einen Antriebsmotor 14, einen Turbolader 20, einen Luftfilter 58 und eine Druckluftaufbereitungsanlage 60. Das Kompressorsystem 10 umfasst selbst einen Kompressor 16, eine Kupplung 54 zum Trennen des über eine Antriebswelle 56 mit dem Antriebsmotor 14 gekoppelten Kompressors 16 von dem Antriebsmotor 14 und in einer Ansaugluftführung 18 angeordnete Mittel 22 zum Reduzieren des Strömungsquerschnitts der Ansaugluftführung 18. Die Ansaugluftführung 18 ist an einen Knotenpunkt 62 gekoppelt, so dass dem Kompressor 16 bereits von dem Turbolader 20 vorverdichtete Luft zuführbar ist. Der Turbolader 20 wird in üblicher Weise von Abgasen des Antriebsmotors 14 angetrieben und versorgt den Antriebsmotor 14 mit vorverdichteter Verbrennungsluft, wobei Umgebungsluft über den Luftfilter 58 angesaugt und von dem Turbolader 20 verdichtet wird. Ein Teil der vorverdichteten Luft wird an dem Knotenpunkt 62 abzweigt und über die Ansaugluftführung 18 dem Kompressor 16 zugeführt, der wiederum über die Antriebswelle 56 von dem Antriebsmotor 14 angetrieben wird. Der Kompressor 16 verdichtet die bereits von dem Turbolader 20 vorverdichtete Luft weiter und führt sie der Druckluftaufbereitungsanlage 60 zu, die in einer dem Fachmann bekannten Weise die Druckluft aufbereitet, das heißt insbesondere von Öl- und Schmutzpartikeln sowie von Feuchtigkeit befreit. Der von dem Turbolader 20 bereitgestellte Ladedruck schwankt in Abhängigkeit von dem Volumen des ihn antreibenden Abgasstromes des Antriebsmotors 14. Um im Fall eines extrem hohen Ladedrucks den Kompressor 16 vor einer thermischen Überbelastung zu schützen, können die Mittel 22 zum Verringern des Strömungsquerschnitts in der Ansaugluftführung 18 einen variablen Staudruck erzeugen, so dass dem Kompressor 16 nicht mehr der volle von dem Turbolader 20 bereitgestellte Ladedruck zugeführt wird. Der dem Kompressor zugeführte Ladedruck kann ab einer gewissen einstellbaren Höhe des von dem Turbolader bereitgestellten Ladedrucks durch die Mittel 22 zum Reduzieren des Strömungsquerschnitts konstant gehalten werden. Dies ist insbesondere auch dann sinnvoll, wenn die nicht dargestellten Druckluftvorratsspeicher des Fahrzeugs 12 gefüllt sind, das heißt momentan keine weitere Druckluft benötigt wird. In diesem Fall wird der Kompressor 16 in eine Leerlaufphase geschaltet, wobei er dann möglichst wenig Energie bei gleichzeitig geringem Ölauswurf aufweisen soll, das heißt eine geringe Menge Öl zusammen mit der Luft fördert. Durch eine Reduzierung des dem Kompressor 16 zugeführten Ladedrucks, das heißt durch eine Verringerung des Strömungsquerschnitts der Ansaugluftführung 18, kann das von dem Kompressor 16 in einer solchen Abblasphase geförderte Luftvolumen reduziert werden, wodurch die Verlustleistung des Kompressors reduzierbar ist. Der dem Kompressor noch zugeführte Ladedruck sollte dabei möglichst nahe an dem Umgebungsdruck liegen, wodurch die Verlustleistung des Kompressors 16 der Verlustleistung eines Umgebungsluft ansaugenden Kompressors entsprechen würde. Da jedoch der Ölauswurf des Kompressors mit wachsenden Unterdruck in dem Kolbenraum des Kompressors während einer Ansaugphase ansteigt, ist eine Reduzierung des dem Kompressor 16 bereitgestellten Ladedrucks auf Umgebungsdruck nur bedingt sinnvoll. Um die Ölförderung des Kompressors 16 weiterhin gering zu halten, wird dem Kompressor 16 ein gegenüber dem Umgebungsdruck noch leicht erhöhter Ladedruck zugeführt, wobei die Verlustleistung des Kompressors 16 geringfügig oberhalb des erreichbaren Minimums liegt. Diese Vorgehensweise eignet sich insbesondere bei kurzen Leerlaufphasen, während denen keine Druckluft gefördert wird. Dauert die Leerlaufphase des Kompressors 16 zeitlich länger an, kann der Kompressor 16 über die Kupplung 54 vollständig außer Betrieb gesetzt werden. In diesem Zustand sinkt sowohl das geförderte Luftvolumen des Kompressors 16 als auch die unerwünschte Ölförderung auf Null ab.

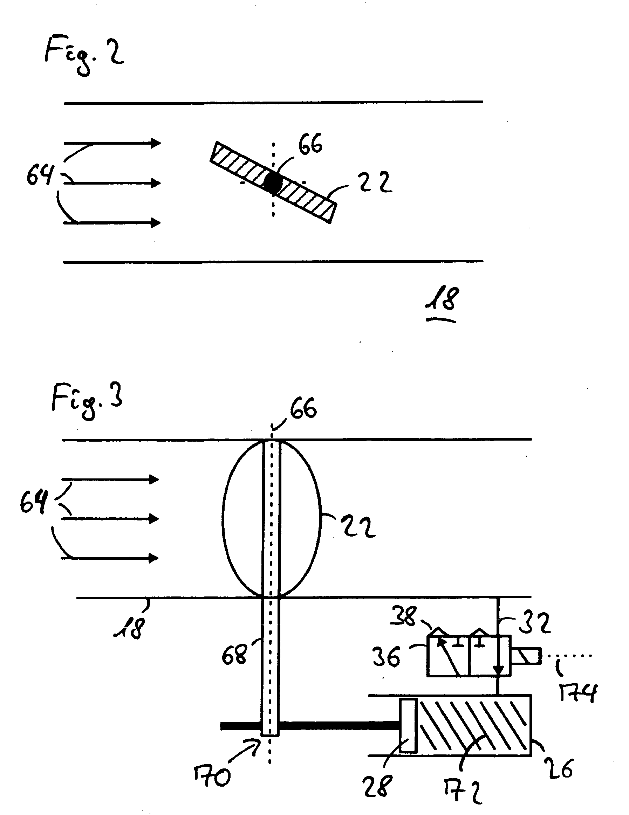

Figur 2 zeigt einen seitlichen Querschnitt einer Ansaugluftführung mit Mitteln zum Reduzieren des Strömungsquerschnitts. Die dargestellte Ansaugluftführung 18 weist in ihrem Inneren Mittel 22 zum Reduzieren des Strömungsquerschnitts auf, die als eine auf eine Drehachse 66 gelagerte Drosselklappe 22 ausgeführt sind. Die in einer Strömungsrichtung 64 durch die Ansaugluftführung 18 strömende vorverdichtete Luft muss um die Drosselklappe 22 herumströmen, wobei sich ein Staudruck in der Ansaugluftführung 18 ausbildet. Der durch die Drosselklappe 22 verursachte Staudruck ist dabei abhängig von der Winkelstellung der Drosselklappe 22 im Verhältnis zur Strömungsrichtung 64 der zugeführten vorverdichteten Luft. Neben der in Figur 2 dargestellten Möglichkeit einer auf einer Achse 66 drehbar gelagerten Drosselklappe 22 ist auch ein vorzugsweise im rechten Winkel zur Strömungsrichtung 64 in die Ansaugluftführung 18 einschiebbarer Schieber möglich, der in analoger Weise einen Staudruck in der Ansaugluftführung 18 erzeugt. Denkbar ist auch die Verwendung einer um eine Achse drehbar gelagerten Kugel mit einer Durchbohrung, wie sie dem Fachmann beispielsweise im Zusammenhang mit einem Kugelventil bekannt ist.

Figur 3 zeigt eine erste Ausführungsform einer Ansaugluftführung mit Mitteln zum Reduzieren des Strömungsquerschnitts und einer zugeordneten Betätigungsvorrichtung. Die in Figur 3 dargestellte Ansaugluftführung 18 entspricht der in Figur 2 dargestellten Ansaugluftführung, wobei die Blickrichtung nun um 90° gegenüber der Blickrichtung aus Figur 2 gedreht ist, so dass die Drehachse 66 in der Ebene der Zeichnung liegt. Die dargestellte Drosselklappe 22 wird über einen Drehstab 68 und eine Umsetzvorrichtung 70, die nicht näher dargestellt ist, von einem pneumatischen Arbeitszylinder 26 mit einem beweglichen Kolben 28 betätigt. Die Umsetzungsvorrichtung 70 wandelt die lineare Bewegung des Kolbens 28 in dem Arbeitszylinder 26 in eine Rotationsbewegung des Drehstabs 68 um, so dass ein Bebeziehungsweise Entlüften des Arbeitszylinders 26 ein Drehen der Drosselklappe 22 um die Drehachse 66 zur Folge hat. Im Inneren des Arbeitszylinders 26 ist weiterhin eine Rückstellfeder 72 angeordnet, die die Position des Kolbens 28 definiert, solange der Arbeitszylinder 26 entlüftet ist. Das Be- beziehungsweise Entlüften des Arbeitszylinders 26 erfolgt über eine pneumatische Steuerleitung 32, in der ein 3/2-Wegeventil 36 mit einer eigener Entlüftung 38 angeordnet ist. Das 3/2-Wegeventil 36 ist über eine elektrische Leitung 74 betätigbar. Auf diese Weise kann durch das Ansteuern des 3/2-Wegeventils 36 über die elektrische Leitung 74 der stromabwärts der Drosselklappe 22 herrschende Ladedruck beeinflusst werden. Soll eine Beeinflussung, das heißt insbesondere eine Beschränkung des Ladedrucks stromabwärts der Drosselklappe 22 erfolgen, so wird das 3/2-Wegeventil 36 in seine dargestellte Schaltposition gebracht. In diesem Zustand ist der Arbeitszylinder 26 über die pneumatische Steuerleitung 32 stromabwärts der Drosselklappe 22 mit der Ansaugluftführung 18 gekoppelt. Der stromabwärts der Drosselklappe 22 anstehende Ladedruck kann daher den Kolben 28 aus seiner durch die Rückstellfeder 72 definierten Ruheposition auslenken, wodurch die Drosselklappe um die Drehachse 66 gedreht wird. Dies verändert jedoch den stromabwärts der Drosselklappe 22 herrschenden Ladedruck, so dass eine Rückkopplung vorliegt. Ist eine Beeinflussung des Ladedrucks stromabwärts der Drosselklappe 22 nicht gewünscht, so kann das 3/2-Wegeventil 36 in seine nicht dargestellte Schaltposition überführt werden, wodurch der Arbeitszylinder 26 über die Entlüftung 38 entlüftet wird. Der Kolben 28 kehrt daraufhin in seine durch die Rückstellfeder 72 definierte Ruheposition zurück. Anstelle eines in dem Arbeitszylinder 26 beweglichen Kolbens 28 kann auch eine elastische Membran verwendet werden, deren elastische Verformung dann durch eine geeignete Umsetzvorrichtung 70 in eine Drehbewegung der Drosselklappe 22 umgesetzt wird.

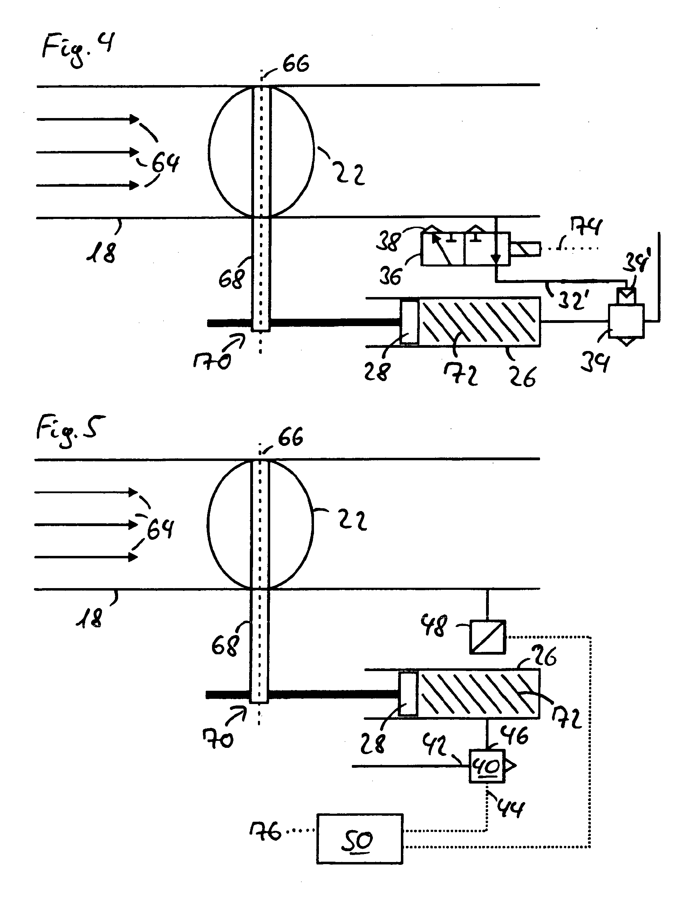

Figur 4 zeigt eine zweite Ausführungsform einer Ansaugluftführung mit Mitteln zum Reduzieren des Strömungsquerschnitts und einer zugeordneten Betätigungsvorrichtung. Im Gegensatz zu der in Figur 3 dargestellten Betätigungsvorrichtung wird nun der Arbeitszylinder 26 über ein Relaisventil 34 mit eigener Entlüftung angesteuert. Das Relaisventil 34 besitzt einen Steuereingang 34', welcher von einer pneumatischen Steuerleitung 32' mit Druck beaufschlagbar ist. In der pneumatischen Steuerleitung 32' ist wiederum ein 3/2-Wegeventil 36 mit einer eigenen Entlüftung 38 angeordnet, welches über eine elektrische Leitung 74 betätigbar ist. Das Relaisventil 34 setzt die an dem Steuereingang 34' anliegenden Steuerdrücke in Form eines Druckverstärkung um, so dass der Arbeitszylinder 26 eine größere Kraft zum Betätigen der Mittel 22 zum Reduzieren des Strömungsquerschnitts aufbringen kann. Weiterhin ist der Arbeitszylinder 26 nicht mehr in direktem Kontakt mit der noch nicht aufbereiteten Druckluft, da der Versorgungsdruck des Relaisventil 34 vorteilhafterweise stromabwärts der aus Figur 1 bekannten Druckluftaufbereitungsanlage 60 entnommen wird.

Figur 5 zeigt eine dritte Ausführungsform einer Ansaugluftführung mit Mitteln zum Reduzieren des Strömungsquerschnitts und einer zugeordneten Betätigungsvorrichtung. Der stromabwärts der Mittel 22 zum Reduzieren des Strömungsquerschnitts herrschende Ladedruck wird nunmehr über einen Drucksensor 48 ermittelt und als elektrisches Signal an ein elektronisches Steuergerät 50 übertragen. Das elektronische Steuergerät 50 steuert dann ein Stetigventil 40 mit einem elektrischen Steuereingang 44, einem pneumatischen Versorgungsdruckeingang 42 und einem pneumatischen Ausgang 46 an, um den Arbeitszylinder 26 zu betätigen. Das Stetigventil 40 verfügt über eine eigene Entlüftung und kann beispielsweise als Proportionalventil, als Wegeventil oder als Servoventil ausgeführt sein. Das elektronische Steuergerät 50 verfügt weiterhin über einen Anschluss 76 an einen Fahrzeugbus, zum Beispiel den CAN-Bus, wodurch eine externe Ansteuerung des elektronischen Steuergeräts 50 ermöglicht wird. Beispielsweise kann das elektronische Steuergerät 50 über den Anschluss 76 angewiesen werden eine Beeinflussung des stromabwärts der Mittel 22 zum Verringern des Strömungsquerschnitts bereitgestellten Ladedrucks einzuleiten beziehungsweise einzustellen, was der Funktionalität des 3/2-Wegeventils 36 aus den Figuren 3 und 4 entspricht. Weiterhin kann in einfacher Weise die Verwendung unterschiedlicher bereitgestellter maximaler Ladedrücke realisiert werden. Das elektronische Steuergerät 50 verändert in Abhängigkeit von dem durch den Drucksensor 48 gemessenen Druck stromabwärts der Mittel 22 zum Verringern des Strömungsquerschnitts die Ansteuerung des Stetigventils 40, wodurch auch bei dieser Ausführungsform eine Rückkopplung gewährleistet ist.

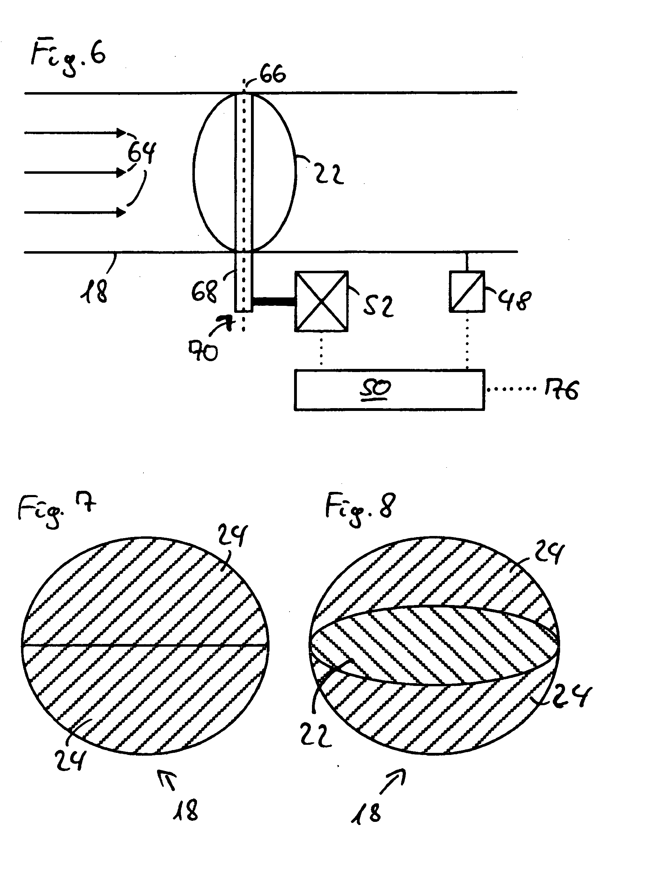

Figur 6 zeigt eine vierte Ausführungsform einer Ansaugluftführung mit Mitteln zum Reduzieren des Strömungsquerschnitts und einer zugeordneten Betätigungsvorrichtung. Im Gegensatz zu den Figuren 3 bis 5 erfolgt das Betätigen der Mittel 22 zum Reduzieren des Strömungsquerschnitts bei dieser Ausführungsform direkt über einen Servomotor 52, der von dem elektronischen Steuergerät 50 auf der Grundlage des durch den Drucksensor 48 gemessenen Drucks und der über den Anschluss 76 an das Steuergerät übertragenen Signalen ein Steuersignal an den Servomotor 52 sendet.

Figur 7 zeigt einen ersten möglichen Strömungsquerschnitt einer Ansaugluftführung. Ein dargestellter Strömungsquerschnitt 24 entspricht im Wesentlichen dem vollständigen Querschnitt der Ansaugluftführung 18. Die aus den Figuren 2 bis 6 bekannten Mittel 22 zum Verringern des Strömungsquerschnitts sind lediglich als dünne Linie erkennbar, da bei dieser Stellung der Drosselklappe der maximale Strömungsquerschnitt 24 der Ansaugluftführung 18 freigegeben wird und kein zusätzlicher Staudruck erzeugt wird.

Figur 8 zeigt einen zweiten möglichen Strömungsquerschnitt einer Ansaugluftführung. Bei der in Figur 8 dargestellten Stellung der Drosselklappe 22 ist ein Teil des Querschnitts der Ansaugluftführung 18 in Strömungsrichtung von der Drosselklappe 22 verdeckt, so dass der Strömungsquerschnitt 24 nicht länger identisch mit dem Querschnitt der Ansaugluftführung 18 ist. Die Drosselklappe 22 erzeugt dabei einen nicht vernachlässigbaren Staudruck.

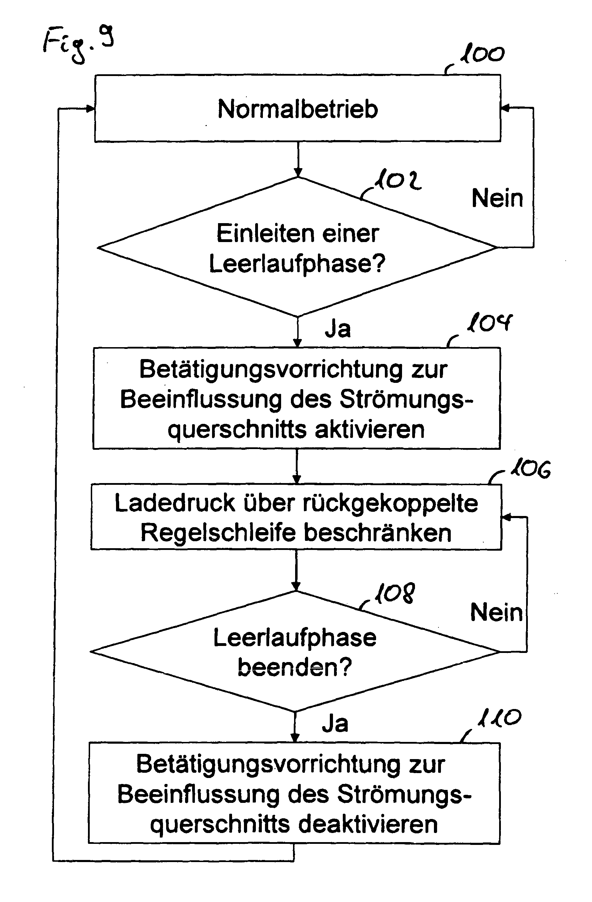

Figur 9 zeigt ein Flußdiagramm zur Veranschaulichung des erfindungsgemäßen Verfahrens. Das erfindungsgemäße Verfahren startet bei Schritt 100 im Normalbetrieb. Als Normalbetrieb wird dabei eine Förderphase des aus Figur 1 bekannten Kompressors 16 bezeichnet, wobei entweder die aus Figur 1 bekannten Mittel 22 zum Reduzieren des Strömungsquerschnitts deaktiviert sind oder ein maximal zulässiger Ladedruck für den Kompressor 16 vorgegeben ist, um diesen von einer thermischen Überlastung zu schützen. Wird anschließend in Schritt 102 keine Leerlaufphase eingeleitet, 102-NEIN, so wird bei Schritt 100 fortgefahren. Wird jedoch eine Leerlaufphase des Kompressors eingeleitet, 102-JA, so wird in Schritt 104 die Betätigungsvorrichtung für die Mittel zur Beeinflussung des Strömungsquerschnitts aktiviert beziehungsweise, falls sie bereits aktiviert waren, ein geringerer maximal zulässiger Ladedruck eingestellt. Im Folgenden wird der dem Kompressor zugeführte Ladedruck über die rückgekoppelte Regelschleife in Schritt 106 beschränkt. Wird anschließend bei Schritt 108 die Leerlaufphase des Kompressors nicht beendet, 108-NEIN, wird bei Schritt 106 fortgefahren. Ist die Leerlaufphase beendet, 108-JA, so wird in Schritt 110 die Betätigungsvorrichtung zur Beeinflussung des Strömungsquerschnitts wieder deaktiviert beziehungsweise der zuvor im Normalbetrieb erlaubte maximale Höchstwert für den Ladedruck wieder eingestellt. Anschließend wird bei Schritt 100 fortgefahren.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kompressorsystem
- 12: Fahrzeug
- 14: Antriebsmotor
- 16: Kompressor
- 18: Ansaugluftführung
- 20: Turbolader
- 22: Drosselklappe
- 24: Strömungsquerschnitt
- 26: pneumatischer Arbeitszylinder
- 28: Kolben
- 32: pneumatische Steuerleitung
- 32': pneumatische Steuerleitung
- 34: Relaisventil
- 34': pneumatischer Steuereingang
- 36: 3/2-Wegeventil
- 38: Entlüftung
- 40: Stetigventil
- 42: pneumatischer Versorgungsdruckeingang
- 44: elektrischer Steuereingang
- 46: pneumatischer Ausgang
- 48: Drucksensor
- 50: elektronisches Steuergerät
- 52: Servomotor
- 54: Kupplung
- 56: Antriebswelle
- 58: Luftfilter
- 60: Druckluftaufbereitungsanlage
- 62: Knotenpunkt
- 64: Strömungsrichtung
- 66: Drehachse
- 68: Drehstab
- 70: Umsetzvorrichtung
- 72: Rückstellfeder
- 74: elektrische Leitung
- 76: Anschluss CAN
- 100: Normalbetrieb
- 102: Einleiten der Leerlaufphase?
- 104: Betätigungsvorrichtung zur Beeinflussung des Strömungsquerschnitts aktivieren
- 106: Ladedruck über rückgekoppelte Regelschleife beschränken
- 108: Leerlaufphase beenden?
- 110: Betätigungsvorrichtung zur Beeinflussung des Strömungsquerschnitts deaktivieren

## Patentansprüche

1. Kompressorsystem (10) für ein Fahrzeug (12), mit
- einem von einem Antriebsmotor (14) des Fahrzeugs (12) angetriebenen Kompressor (16) und
- einer Ansaugluftführung (18) zur Zuführung von bereits durch einen Turbolader (20) des Antriebsmotors (14) vorverdichteter Luft zu dem Kompressor (16), wobei in der Ansaugluftführung (18) Mittel (22) zum Verringern des Strömungsquerschnitts (24) angeordnet sind, über die der Ladedruck der dem Kompressor (16) zugeführten bereits vorverdichteten Luft beschränkbar ist, **dadurch gekennzeichnet, dass** ein einstellbarer Höchstwert des Ladedrucks in einer Leerlaufphase in Abhängigkeit von zumindest einer der folgenden Größen gewählt wird:
- Ölauswurf des Kompressors (16),
- Verlustleistung des Kompressors (16).

2. Kompressorsystem (10) gemäß Anspruch 1, **dadurch gekennzeichnet, dass** die Mittel (22) zum Verringern des Strömungsquerschnitts (24) von einem pneumatischen Arbeitszylinder (26) mechanisch betätigbar sind.

3. Kompressorsystem (10) gemäß Anspruch 2, **dadurch gekennzeichnet, dass** der Arbeitszylinder (26) einen beweglichen Kolben (28) umfasst.

4. Kompressorsystem (10) nach Anspruch 2, **dadurch gekennzeichnet, dass** der Arbeitszylinder (26) eine flexible Membran umfasst.

5. Kompressorsystem (10) gemäß einem der Ansprüche 2 bis 4, **dadurch gekennzeichnet, dass** der pneumatische Arbeitszylinder (26) über eine pneumatische Steuerleitung (32) mit dem stromabwärts der Mittel (22) zum Verringern des Strömungsquerschnitts (24) anstehenden Ladedruck beaufschlagbar ist.

6. Kompressorsystem (10) gemäß einem der Ansprüche 2 bis 4, **dadurch gekennzeichnet, dass** der pneumatische Arbeitszylinder (26) über ein Relaisventil (34) mit einem Arbeitsdruck beaufschlagbar ist, wobei ein pneumatischer Steuereingang (34') des Relaisventils (34) über eine pneumatische Steuerleitung (32') mit dem stromabwärts der Mittel (22) zum Verringern des Strömungsquerschnitts (24) anstehenden Ladedruck beaufschlagbar ist.

7. Kompressorsystem (10) gemäß Anspruch 5 oder 6, **dadurch gekennzeichnet, dass** in der pneumatischen Steuerleitung (32; 32') ein 3/2-Wegeventil (36) mit eigener Entlüftung (38) angeordnet ist, um die Steuerleitung (32; 32') drucklos schalten zu können.

8. Kompressorsystem (10) gemäß einem der Ansprüche 2 bis 4, **dadurch gekennzeichnet,**
- **dass** das Kompressorsystem (10) ein elektrisch ansteuerbares Stetigventil (40) mit einem pneumatischen Versorgungsdruckeingang (42), einem elektrischen Steuereingang (44) und einem pneumatischen Ausgang (46) zum Betätigen des Arbeitszylinders (26) umfasst,
- **dass** der stromabwärts der Mittel (22) zum Verringern des Strömungsquerschnitts (24) anstehende Ladedruck von einem Drucksensor (48) erfassbar ist, und
- **dass** das Kompressorsystem (10) ein elektronisches Steuergerät (50) umfasst, das geeignet ist, ein elektrisches Steuersignal zum Betätigen des Stetigventils (40) in Abhängigkeit von dem ermittelten Ladedruck zu erzeugen, um den Ladedruck zu beschränken.

9. Kompressorsystem (10) gemäß Anspruch 1, **dadurch gekennzeichnet, dass** die Mittel (22) zum Verringern des Strömungsquerschnitts (24) von einem elektrisch ansteuerbaren Servomotor (52) betätigbar sind.

10. Kompressorsystem (10) gemäß Anspruch 9, **dadurch gekennzeichnet, dass** das Kompressorsystem (10) ein elektrisches Steuergerät (50) umfasst, das geeignet ist, ein elektrisches Steuersignal zum Ansteuern des elektrisch ansteuerbaren Servomotors (52) zu erzeugen, um den Ladedruck zu beschränken, wobei das Steuersignal auf einem von einem Drucksensor (48) stromabwärts der Mittel (22) zum Verringern des Strömungsquerschnitts (24) ermittelten Ladedruck basiert.

11. Kompressorsystem (10) gemäß einem der vorhergehenden Ansprüche, **dadurch gekennzeichnet, dass** das Kompressorsystem (10) eine dem Kompressor (16) zugeordnete Kupplung (54) umfasst, die geeignet ist, den Kompressor (16) vollständig von dem Antriebsmotor (14) zu entkoppeln.

12. Verfahren zum Betreiben eines Kompressorsystem (10) für ein Fahrzeug (12), mit
- einem von einem Antriebsmotor (14) des Fahrzeugs (12) angetriebenen Kompressor (16) und
- einer Ansaugluftführung (18) zur Zuführung von bereits durch einen Turbolader (20) des Antriebsmotors (14) vorverdichteter Luft zu dem Kompressor (16),
wobei der Ladedruck der dem Kompressor (16) zugeführten bereits vorverdichteten Luft durch Betätigen von in der Ansaugluftführung (18) angeordneten Mitteln (22) zum Verringern des Strömungsquerschnitts (24) auf einen einstellbaren Höchstwert beschränkt wird, **dadurch gekennzeichnet, dass** der Höchstwert in einer Leerlaufphase in Abhängigkeit von zumindest einer der folgenden Größen gewählt wird:
- Ölauswurf des Kompressors (16),
- Verlustleistung des Kompressors (16).

13. Verfahren nach Anspruch 12, **dadurch gekennzeichnet, dass** der Höchstwert in Abhängigkeit von dem Betriebszustand unterschiedlich gewählt wird.

14. Verfahren nach Anspruch 12 oder 13, **dadurch gekennzeichnet, dass** der dem Kompressor (16) zugeführte Ladedruck durch eine dynamische Anpassung des durch die Mittel (22) zum Verringern des Strömungsquerschnitts (24) freigegebenen Strömungsquerschnitts (24) bei einem Überschreiten des einstellbaren Höchstwerts unabhängig von der Kompressordrehzahl und dem von dem Turbolader (20) bereitgestellten Ladedruck konstant gehalten wird.

## Claims

1. Compressor system (10) for a vehicle (12), having
- a compressor (16) driven by a drive motor (14) of the vehicle (12), and
- a suction air conduit (18) for supplying air that has already been precompressed by a turbocharger (20) of the drive motor (14) to the compressor (16),
means (22) for reducing the flow cross section (24) being disposed in the suction air conduit (18), it being possible to use said means to limit the charging pressure of the already precompressed air supplied to the compressor (16), **characterized in that** an adjustable maximum value of the charging pressure in an idling phase is chosen as a function of at least one of the following variables:
- oil ejected by the compressor (16),
- power loss of the compressor (16).

2. Compressor system (10) according to Claim 1, **characterized in that** the means (22) for reducing the flow cross section (24) can be actuated mechanically by a pneumatic working cylinder (26).

3. Compressor system (10) according to Claim 2, **characterized in that** the working cylinder (26) comprises a mobile piston (28).

4. Compressor system (10) according to Claim 2, **characterized in that** the working cylinder (26) comprises a flexible diaphragm.

5. Compressor system (10) according to one of Claims 2 to 4, **characterized in that** the pneumatic working cylinder (26) can be supplied via a pneumatic control line (32) with the charging pressure prevailing downstream of the means (22) for reducing the flow cross section (24).

6. Compressor system (10) according to one of Claims 2 to 4, **characterized in that** the pneumatic working cylinder (26) can be supplied with a working pressure via a relay valve (34), it being possible for a pneumatic control input (34') of the relay valve (34) to be supplied via a pneumatic control line (32') with the charging pressure prevailing downstream of the means (22) for reducing the flow cross section (24).

7. Compressor system (10) according to Claim 5 or 6, **characterized in that** a 3/2-way valve (36) with its own vent (38) is disposed in the pneumatic control line (32; 32') to enable the control line (32; 32') to be set to a depressurized condition.

8. Compressor system (10) according to one of Claims 2 to 4, **characterized in**
- **that** the compressor system (10) comprises an electrically activatable continuously variable valve (40) with a pneumatic supply pressure input (42), an electric control input (44) and a pneumatic output (46) for actuating the working cylinder (26),
- **that** the charging pressure prevailing downstream of the means (22) for reducing the flow cross section (24) can be detected by a pressure sensor (48), and
- **that** the compressor system (10) comprises an electronic control unit (50) which is suitable for producing an electric control signal for actuating the continuously variable valve (40) as a function of the charging pressure determined in order to limit the charging pressure.

9. Compressor system (10) according to Claim 1, **characterized in that** the means (22) for reducing the flow cross section (24) can be actuated by an electrically activatable servomotor (52).

10. Compressor system (10) according to Claim 9, **characterized in that** the compressor system (10) comprises an electric control unit (50) which is suitable for producing an electric control signal for activating the electrically activatable servomotor (52) in order to limit the charging pressure, the control signal being based on a charging pressure determined by a pressure sensor (48) downstream of the means (22) for reducing the flow cross section (24).

11. Compressor system (10) according to one of the preceding claims, **characterized in that** the compressor system (10) comprises a clutch (54) assigned to the compressor (16), which is suitable for decoupling the compressor (16) completely from the drive motor (14).

12. Method for operating a compressor system (10) for a vehicle (12), having
- a compressor (16) driven by a drive motor (14) of the vehicle (12), and
- a suction air conduit (18) for supplying air that has already been precompressed by a turbocharger (20) of the drive motor (14) to the compressor (16),
the charging pressure of the already precompressed air supplied to the compressor (16) being limited by actuating means (22) for reducing the flow cross section (24) to an adjustable maximum value, which means are disposed in the suction air conduit (18), **characterized in that** the maximum value in an idling phase is chosen as a function of at least one of the following variables:
- oil ejected by the compressor (16),
- power loss of the compressor (16).

13. Method according to Claim 12, **characterized in that** the maximum value chosen varies as a function of the operating condition.

14. Method according to Claim 12 or 13, **characterized in that,** when the adjustable maximum value is exceeded, the charging pressure supplied to the compressor (16) is held constant, irrespective of the compressor speed and the charging pressure provided by the turbocharger (20), by dynamic adaptation of the flow cross section (24) exposed by the means (22) for reducing the flow cross section (24).

## Revendications

1. Système compresseur (10) pour un véhicule (12), comprenant :
- un compresseur (16) entraîné par un moteur d'entraînement (14) dudit véhicule (12), et
- une conduite d'aspiration d'air (18) pour l'alimentation de l'air pré-comprimé par un turbocompresseur (20) dudit moteur d'entraînement (14) vers ledit compresseur (16),
dans lequel des moyens (22) sont disposés dans ladite conduite d'aspiration d'air (18) pour la réduction de la section transversale d'écoulement (24), moyennant lesquels la pression d'alimentation de l'air pré-comprimé déjà, qui est alimenté audit compresseur (16), peut être limitée, **caractérisé en ce qu'**une valeur maximale ajustable de la pression d'alimentation est choisie dans une phase de marche au ralenti en fonction d'au moins un des paramètres suivants :
- éjection d'huile dudit compresseur (16),
- perte de puissance dudit compresseur (16).

2. Système compresseur (10) selon la revendication 1, **caractérisé en ce que** lesdits moyens (22) à réduire la section transversale d'écoulement (24) sont opérable de manière mécanique par un cylindre de travail pneumatique (26).

3. Système compresseur (10) selon la revendication 2, **caractérisé en ce que** ledit cylindre de travail (26) comprend un piston mobile (28).

4. Système compresseur (10) selon la revendication 2, **caractérisé en ce que** ledit cylindre de travail (26) comprend un diaphragme flexible.

5. Système compresseur (10) selon une quelconque des revendications 2 à 4, **caractérisé en ce que** ledit cylindre de travail pneumatique (26) est apte à être sollicité via une conduite de commande pneumatique (32) par la pression d'alimentation régnant en aval desdits moyens (22) pour la réduction de la section transversale d'écoulement (24).

6. Système compresseur (10) selon une quelconque des revendications 2 à 4, **caractérisé en ce que** ledit cylindre de travail pneumatique (26) est apte à être sollicité via une soupape à relais (34) par une pression de travail, à une entrée de commande pneumatique (34') de ladite soupape à relais (34) étant apte à être sollicité via une conduite de commande pneumatique (32') par la pression d'alimentation régnant en aval desdits moyens (22) pour la réduction de la section transversale d'écoulement (24).

7. Système compresseur (10) selon la revendication 5 ou 6, **caractérisé en ce qu'**une soupape à 3/2 voies (36), à son moyen de purge séparé (38), est disposée dans ladite conduite de commande pneumatique (32 ; 32') afin de permettre la mise hors pression de ladite conduite de commande (32 ; 32').

8. Système compresseur (10) selon une quelconque des revendications 2 à 4, **caractérisé en ce**
- **que** le système compresseur (10) comprend une soupape à réglage continu (40), apte à être commandée par voie électrique, qui est munie d'une entrée de pression d'alimentation pneumatique (42), une entrée de commande électrique (44) et d'une sortie pneumatique (46) pour l'actionnement dudit cylindre de travail (26),
- en ce que la pression d'alimentation régnant en aval desdits moyens (22) de réduction de la section transversale d'écoulement (24) peut être détectée par un capteur de pression (48), et
- en ce que le système compresseur (10) comprend un dispositif électronique de commande (50), qui est apte à engendrer un signal de commande électrique pour l'actionnement de ladite soupape à réglage continu (40 en fonction de la pression d'alimentation détectée, afin de limiter la pression d'alimentation.

9. Système compresseur selon la revendication 1, **caractérisé en ce qu'**une lesdits moyens (22) de réduction de la section transversale d'écoulement (24) sont aptes à être actionné par un servomoteur à commande électrique (52)

10. Système compresseur (10) selon la revendication 9, **caractérisé en ce que** le système compresseur (10) comprend un dispositif de commande électrique (50), qui est apte à engendrer un signal électrique de commande pour la commande dudit servomoteur (52) à commande électrique, afin de limiter la pression d'alimentation, audit signal de commande étant basé sur une pression d'alimentation, qui est détectée par un capteur de pression (48) en aval desdits moyens (22) de réduction de la section transversale d'écoulement (24).

11. Système compresseur selon une quelconque des revendications 2 à 4, **caractérisé en ce que** le system compresseur (10) comprend un embrayage (54) affecté audit compresseur (16), qui est apte à débrayer ledit compresseur (16) complètement dudit moteur d'entraînement (14).

12. Procédé à opérer un système compresseur (10) pour un véhicule (12), comprenant
- un compresseur (16) entraîné par un moteur d'entraînement (14) dudit véhicule (12), et
- une conduite d'aspiration d'air (18) pour l'alimentation de l'air pré-comprimé par un turbocompresseur (20) dudit moteur d'entraînement (14) vers ledit compresseur (16),
dans lequel la pression d'alimentation de l'air pré-comprimé déjà, est limité à une valeur maximale ajustable moyennant l'actionnement des moyens (22) de réduction de la section transversale d'écoulement (24), qui sont disposés dans ladite conduite d'aspiration d'air, **caractérisé en ce que** ladite valeur maximale est choisie dans une phase de marche au ralenti en fonction d'au moins un des paramètres suivants :
- éjection d'huile dudit compresseur (16),
- perte de puissance dudit compresseur (16).

13. Procédé selon la revendication 12, **caractérisé en ce que** ladite valeur maximale est choisie aux niveaux différents en fonction de l'état de marche.

14. Procédé selon la revendication 12 ou 13, **caractérisé en ce que** la pression d'alimentation alimentée audit compresseur (16) est maintenue à un niveau constant par adaptation dynamique de ladite section transversale d'écoulement, qui est dégagée par lesdits moyens (11) de réduction de la section transversale d'écoulement (24), quand ladite valeur maximale ajustable est dépassée, indépendamment de la vitesse de rotation dudit compresseur et de la pression d'alimentation fournie par ledit turbocompresseur (20).
